(19) Europäisches Patentamt

European Patent Office

Office européen des brevets

(11) **EP 0 980 989 A2**

(12) **EUROPÄISCHE PATENTANMELDUNG**

(43) Veröffentlichungstag:
23.02.2000 Patentblatt 2000/08

(51) Int. Cl.⁷: **F16D 65/12**

(21) Anmeldenummer: **99112140.1**

(22) Anmeldetag: **24.06.1999**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **17.08.1998 DE 19837166**

(71) Anmelder:
**Dr.Ing. h.c.F. Porsche Aktiengesellschaft**
**70435 Stuttgart (DE)**

(72) Erfinder:
• **Von Sivers, Rolf**
**71287 Weissach-Flacht (DE)**
• **Kappich, Joachim**
**75378 Bad Liebenzell (DE)**
• **Thomas, Claus**
**70736 Stuttgart (DE)**

(54) **Scheibenbremse für Fahrzeuge**

(57) Diese Scheibenbremse (1) umfaßt eine Bremsscheibe (3), die mittels eines Belagvorrichtungen (6,7) tragenden Bremssattels (2) umgriffen wird. Die Bremsscheibe (3) weist auf der einer Bremsbelagfläche (19) zugekehrten Seite der Belagvorrichtung (6,7) eine konkave Bremsscheibenfläche (18) auf.

Um die bei Auslaufbremsungen auftretenden Geräuschemissionen zumindest zu reduzieren, ist die Konkavität der Bremsscheibenfläche (18) und die Konvexität der Bremsbelagfläche (19) derart ausgebildet, daß sich ein geräuschreduzierender Formschluß ergibt.

Fig.1

EP 0 980 989 A2

**Beschreibung**

Die Erfindung bezieht sich auf eine Scheibenbremse nach dem Oberbegriff des Patentanspruchs 1.

Scheibenbremsen sind für eine gezielte Verzögerung eines Fahrzeuges gut geeignet, verursachen zuweilen jedoch bei Auslaufbremsvorgängen im niedrigen Systemdruckbereich z.B. wenn ein Fahrzeug an einen Fußgängerüberweg, eine Verkehrsampel oder dergleichen heranfährt Geräusche, die u.a. auf Fußgänger störend wirken.

Zur Vermeidung eines ungleichmäßigen Verschleißes von Bremsscheiben ist es bekannt, DE 43 36 094 A1, eine Bremsscheibe durch Konturierung zu vergrößern. Dabei ist bei einer Ausführungsform die Bremsscheibe konkav gewölbt. Mit dieser Ausbildung lassen sich die beschriebenen Störgeräusche schwerlich vermeiden.

Aufgabe der Erfindung ist es an der Bremsscheibe und der Belagvorrichtung einer Scheibenbremse solche Vorkehrungen zu treffen, daß bei guter Bremswirkung Lärmemissionen unter entsprechenden Betriebsbedingungen zumindest reduziert werden.

Erfindungsgemäß wird diese Aufgabe durch die Merkmale des Patentanspruchs 1 gelöst. Weitere die Erfindung ausgestaltenden Merkmale sind in den Unteransprüchen enthalten.

Die mit der Erfindung hauptsächlich erzielten Vorteile sind darin zu sehen, daß durch die Konkavität der Bremsscheibenfläche und die Konvexität der Bremsbelagfläche beim Bremsvorgang eine Zentrierung der beiden Flächen zueinander bewirkt wird. Dies ergibt funktionsgerechten Formschluß und reduziert störende Geräusche z.B. bei Auslaufbremsungen - Fußgängerüberweg, Verkehrsampeln -.

Eine besonders gute Funktion wird erreicht, wenn die Konkavität der Bremsscheibenfläche durch einen Konkavitätsfaktor gleich oder größer 3 bestimmt wird. Sofern der den Formschluß beeinflussende Führungsfaktor F gleich oder größer 1,8 ist, wird das geräuscharme Zusammenwirken der Flächen zusätzlich unterstützt. Eine weitere Optimierung wird erreicht, wenn die wirksame Bremsbelaglänge LW in Abhängigkeit der mittleren Reibungumfangslinie UM der Bremsscheibenfläche und der Anzahl von Schwingungsknoten dimensioniert wird.

Die Konkavität der Bremsscheibenfläche bzw. Konvexität der Bremsbelagfläche wird im Querschnitt gesehen jeweils durch einen Radius gebildet. Es besteht jedoch auch die Möglichkeit die Konkavität bzw. Konvexität durch eine beliebig gewölbte Kurve oder zwei jeweils im stumpfen Winkel zueinander verlaufende Geraden zu bilden. Schließlich ist auch denkbar zwischen den Bremsscheiben ein oder mehrere Durchgangskanäle vorzusehen, und die Wanddicke der Bremsscheiben in radialer Richtung kann variieren.

In der Zeichnung werden Ausführungsbeispiele der Erfindung gezeigt, die nachstehend näher beschrieben sind. Es zeigen

Fig. 1 eine Seitenansicht einer Scheibenbremse mit einer Bremsscheibe und einem Bremssattel mit Belagvorrichtungen, teilweise im Schnitt

Fig. 2 einen Schnitt nach der Linie II-II der Fig. 1, in kleinerem Maßstab

Fig. 3 eine Teilansicht der Fig. 1,

Fig. 4 eine Ansicht entsprechend Fig. 3,

Fig. 5 eine schematische Ansicht entsprechend Fig. 2 mit der Darstellung von Schwingungsknoten.

Eine Scheibenbremse 1, die z.B. in ein Straßenfahrzeug, ein Schienenfahrzeug, ein Flugzeug oder dergleichen eingebaut sein kann, umfaßt einen Bremssattel 2 und eine Bremsscheibe 3 mit gegenüberliegenden Reibringhälften 4, 5.

Der Bremssattel 2 ist als sogenannter Festsattel ausgeführt, der beiderseits der Bremsscheibe 3 schwimmend gelagert Belagvorrichtungen 6, 7 aufweist, die mittels Kolben 8, 9 beaufschlagbar sind. Die Kolben 8, 9 sind axialbeweglich in Bohrungen 10, 11 von Sattelgehäusen 12, 13 gelagert. Jede Belagvorrichtung 6 umfaßt einen Träger 14 und einen Belag 15, die fest miteinander verbunden sind. Der Träger 14 ist mit einer Bohrung 16 versehen, die einen Lagerbolzen 17 umgibt. Auf letzterem ist die Belagvorrichtung 6 verschieblich, das heißt, in dessen axialer Richtung gelagert.

Die Bremsscheibe 3 weist auf der der Belagvorrichtung 6 zugekehrten Seite, das heißt an der Reibringhälfte 4, eine konkave Bremsscheibenfläche 18 auf. Eine der Bremsscheibenfläche 18 benachbarte Bremsbelagfläche 19 der Belagvorrichtung 6 korrespondiert mit besagter Bremsscheibenfläche, ist also konvex ausgebildet.

Die Konkavität der Bremscheibenfläche 18 wird durch einen Konkavitätsfaktor KF wie folgt definiert:

$$KF = \frac{K*100}{H}$$

$$KF \geq 3$$

Dabei entsprechen K dem Maß zwischen äußeren Begrenzungen 20, 21 und dem größten auf einer mittleren Reibumfangslinie UM der Bremsscheibenfläche 17 liegenden Einzug 22 und H der Höhe der radialen Bremsbelagfläche 19.

Beim Bremsvorgang ergibt sich zwischen Bremsscheibenfläche 18 und Bremsbelagfläche 19 Formschluß. Dieser Formschluß wird durch einen Führungsfaktor F bestimmt, der nachstehend definiert ist:

$$F = \frac{LG}{H}$$

$$F = \geq 1,8$$

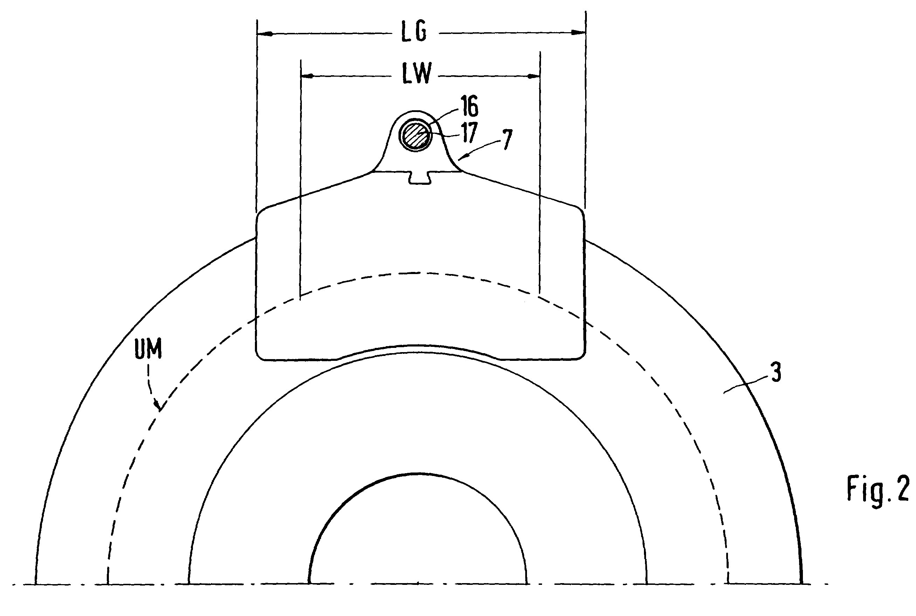

Hierbei entspricht LG der geometrischen Bremsbelaglänge - Figur 2 - und H wie bereits erwähnt, der Höhe H der radialen Bremsbelagfläche 19.

Darüber hinaus ist der Formschluß zwischen der Bremsscheibenfläche 18 und der Bremsbelagfläche 19 in Abhängigkeit einer wirksamen Bremsbelaglänge LW - Figur 2 - wie folgt auslegbar:

$$LW \approx 0,7 * LG$$

$$LW > \frac{UM}{N}$$

Bei vorstehender Formel sind LG die geometrische Bremsbelaglänge - Figur 2 - , UM die mittlere Reibumfangslinle der Bremsscheibenfläche - LG und UM sind bereits vorstehend erläutert - und N die Anzahl von Schwingungsknoten.

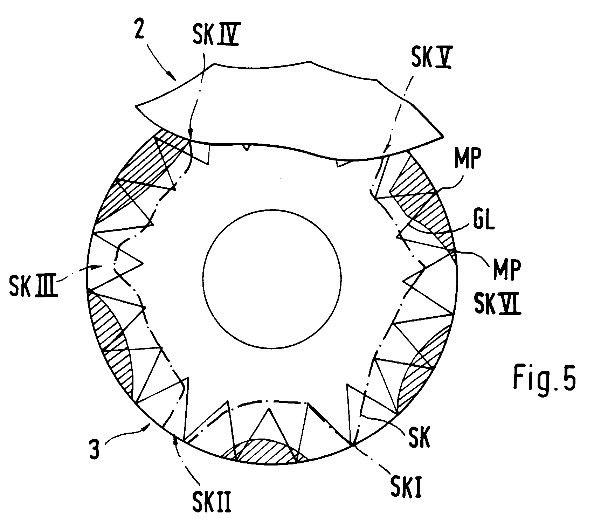

Die Anzahl N von Schwingungsknoten SK können z.B. 4, 6, 8 sein. In Figur 5 sind sechs Schwingungsknoten SK I bis SK VI abgeleitet, die von der wirksamen Bremsbelaglänge LW abhängig sind, Im Ausführungsbeispiel ist LW ca. 1/6 des Bremsbelagflächenumfangs. Die größten Vibrationspegel - auch Schwingungsbäuche genannt - der Schwingform liegen jeweils zwischen den Schwingungsknoten SK I - SK VI und sind schraffiert gekennzeichnet, wobei Meßpunkte MP Gitterlinien GL einschließen.

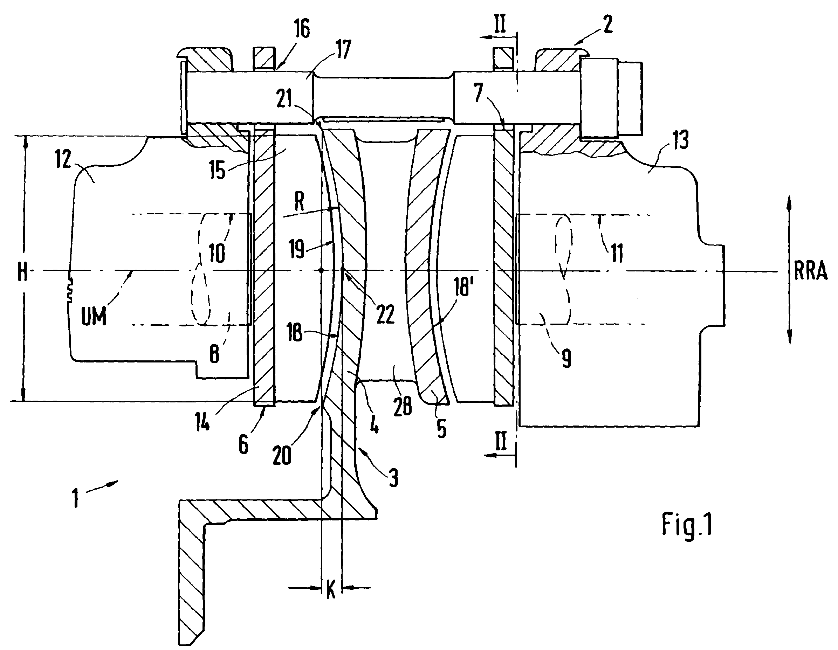

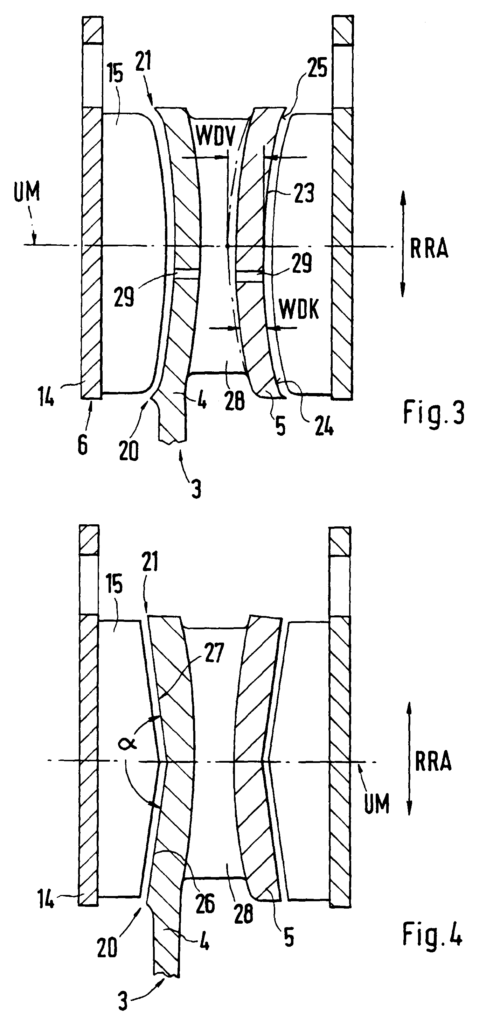

Gemäß Figur 1 wird die Konkavität der Bremsscheibenfläche 18 - im Querschnitt gesehen - durch einen Radius R gebildet. In Figur 3 ist die Konkavität der Bremsscheibenfläche 18 als beliebig gewölbte Kurve 23 dargestellt, die z.B. in einem mittleren Bereich BM flacher ist als in Randbereichen 24, 25. Darüber hinaus kann die Konkavität auch im stumpfen Winkel α zueinander verlaufende Geraden 26, 27 gebildet werden.

Aus Figur 1 geht hervor, daß sowohl die Reibringhälfte 4 wie auch die Reibringhälfte 5 konkave Bremsscheibenflächen 18, 18' aufweisen. Denkbar ist auch die Bremsscheibenfläche 17 konkav und die Bremsscheibenfläche 18' plan auszuführen.

Zwischen den Reibringhälften 4 und 5 sind Durchgangskanäle 28 vorgesehen, und die Reibringhälften 4 und 5 können mit einer Vielzahl von Durchgangsöffnungen 29 versehen sein, die dem Naßansprechverhalten und zur Wärmeabführung dienen - Figur 3 -.

Die Wanddicke WDV der Reibringhälfte 5 - Figur 3 - variiert - gegenüber der kontinuierlichen Wanddicke WDK - in radialer Richtung RRA. Vorzugsweise ist die Wanddicke WDV im Bereich der Reibumfangslinie UM größer als im übrigen Bereich, das heißt die Wandstärke nimmt von der Reibumfangslinie UM aus gesehen zum Zentrum und zur Außenseite der Bremsringhälfte 5 hin ab.

## Patentansprüche

**1.** Scheibenbremse für Fahrzeuge insbesondere Kraftfahrzeuge mit einer Bremsscheibe und einer mit letzterem zusammenwirkenden an einem Bremssattel gehaltenen Belagvorrichtung, wobei die Bremsscheibe auf der einer Bremsbelagfläche zugekehrten Seite der Belagvorrichtung eine konkave Bremsscheibenfläche aufweist dadurch gekennzeichnet, daß die Bremsbelagfläche (19) relativ zur konkaven Bremsscheibenfläche (18) konvex ausgebildet ist dergestalt, daß beim Bremsvorgang sich durch die Konkavität der Bremsscheibenfläche (18) und die Konvexität der Bremsbelagfläche (19) über einen wesentlichen Bereich der Bremsbelagfläche (19) zwischen der Bremsscheibenfläche (18) und der Bremsbelagfläche (19) ein geräuschreduzierender Formschluß ergibt.

**2.** Scheibenbremse nach Anspruch 1 dadurch gekennzeichnet, daß die Konkavität der Bremsscheibenfläche (18) durch einen Konkavitätsfaktor (KF) wie folgt definiert wird,

$$KF = \frac{K*100}{H}$$

$$KF \geq 3$$

wobei K dem Maß zwischen äußeren Begrenzungen (21, 22) und einem größten Einzug (22) der Bremsscheibenfläche (18) und H der Höhe der Bremsbelagfläche (19) entsprechen.

**3.** Scheibenbremse nach den Ansprüchen 1 und 2 dadurch gekennzeichnet, daß der Formschluß zwischen der Bremsbelagfläche (19) und der Bremsscheibenfläche (18) durch einen Führungsfaktor (F) bestimmt wird, der wie folgt definiert ist,

$$F = \frac{LG}{H}$$

$$F \geq 1,8$$

wobei LG der geometrischen Bremsbelaglänge und H der Höhe der Bremsbelagfläche (19) entspricht.

**4.** Scheibenbremse nach den Ansprüchen 1 und 3 dadurch gekennzeichnet, daß der Formschluß zwischen der Bremsbelagfläche (19) und der Bremsscheibenfläche (18) durch eine vorgegebene wirksame Bremsbelagflächenlänge wie folgt definierbar ist,

$$LW \approx 0{,}7 * LG$$

$$LW > \frac{UM}{N}$$

wobei LW der wirksamen Bremsbelaglänge, UM der mittleren Reibumfangslinie der Bremsscheibenfläche und N der Anzahl (4, 6, 8 ...) der Schwingungsknoten (SK) entsprechen.

5. Scheibenbremse nach einem oder mehreren der vorangehenden Ansprüche dadurch gekennzeichnet, daß im Querschnitt gesehen die Konkavität der Bremsscheibenfläche (18) bzw. die Konvexität der Bremsbelagfläche (19) jeweils durch einen Radius (R) gebildet wird.

6. Scheibenbremse nach einem oder mehreren der vorangehenden Ansprüche dadurch gekennzeichnet, daß im Querschnitt gesehen die Konkavität der Bremsscheibenfläche (18) bzw. Konvexität der Bremsbelagfläche (19) durch eine beliebig gewölbte Kurve (23) oder zwei jeweils im stumpfen Winkel $\alpha$ zueinander verlaufende Geraden (26, 27) gebildet wird.

7. Scheibenbremse nach einem oder mehreren der vorangehenden Ansprüche mit gegenüberliegenden Bremsbelägen, die auf benachbarte Bremsscheibenflächen einwirken dadurch gekennzeichnet, daß auf der einen Seite der Bremsscheibe (3) die Bremsscheibenfläche (18) konkav und die Bremsbelagfläche (19) konvex ist, wogegen auf der anderen Seite der Bremsscheibe (3) die Bremsscheibenfläche (18') und die Bremsbelagfläche plan ausgeführt sind.

8. Scheibenbremse nach einem oder mehreren der vorangehenden Ansprüche dadurch gekennzeichnet, daß zwischen den die Bremsscheibenflächen (18, 18') umfassenden beabstandeten Reibringhälften (4, 5) ein oder mehrere Durchgangskanäle (28) vorgesehen sind.

9. Scheibenbremse nach einem oder mehreren der vorangehenden Ansprüche dadurch gekennzeichnet, daß die Wanddicken der Reibringhälften (4, 5) in radialer Richtung (RRA) variieren.

10. Scheibenbremse nach Anspruch 9 dadurch gekennzeichnet, daß die Wanddicke im Bereich der mittleren Reibumfangslinie (UM) der Reibringhälften (4, 5) größer ist als in einem übrigen Bereich.

Fig.1

EP 0 980 989 A2

Fig. 2

EP 0 980 989 A2

UM

15   21                    25

WDV

23

RRA

29                    29

29                    WDK

14      4   28

6   20         5   24

3

Fig.3

15   21

27

α

RRA

UM

14

20         26   28   5

4

3

Fig.4

Fig.5